Europäisches Patentamt

European Patent Office

Office européen des brevets

(19)

(11) Publication number: **0 334 258**
A1

## (12) EUROPEAN PATENT APPLICATION

(21) Application number: 89104943.9

(22) Date of filing: 20.03.89

(51) Int. Cl.4: **A01N 25/26** , **A01N 25/10**

(30) Priority: 21.03.88 PL 271321

(43) Date of publication of application:
27.09.89 Bulletin 89/39

(84) Designated Contracting States:
AT CH DE FR LI NL

(71) Applicant: INSTYTUT WARZYWNICTWA
ul. 22 Lipca 1/3
96-100 Skierniewice(PL)

Applicant: Politechnika Lodzka
ul. Zwirki 36
90-924 Lodz(PL)

(72) Inventor: Kotlinski, Stanislaw
ul. Mszczonowska 47/47
PL-96-100 Skierniewice(PL)
Inventor: Narkiewicz-Jodko, Jan
ul 22 Lipca 1/3 m44
PL-96-100 Skierniewice(PL)
Inventor: Kotlinska, Teresa

ul. Mszczonowska 47/47
PL-96-100 Skierniewice(PL)
Inventor: Kubajak, Anna
poczt. Krezeszowice
Nawojowa Góra 531(PL)
Inventor: Struszczyk, Henryk
ul. Tuwima 8 m 29
PL-95-100 Zgierz(PL)
Inventor: Polowinski, Stefan
ul. Strulczyka 10/2
PL-93-192 Lódz(PL)
Inventor: Koch, Stanislaw
ul. Biernackiego 8/10
PL-97-200 Tomaszów Mazowiecki(PL)
Inventor: Dobrzanski, Adam
ul. Instytutowa 21
PL-96-100 Skierniewice(PL)

(74) Representative: von Füner, Alexander, Dr. et al
Patentanwälte v. Füner, Ebbinghaus, Finck
Mariahilfplatz 2 & 3
D-8000 München 90(DE)

(54) **A product for seed incrustation and a preparation of the product for seed incrustation (film coating).**

(57) The product according to the invention is a solution of macromolecular compounds containing carboxyl and amide groups in a molar ratio of carboxyl groups to amide groups of 1:0,001 -1:1. The product according to the invention is prepared from polyacrylonitrile hydrolyzate or acrylonitrile copolymer optionally supplemented with other polymers such as cellulose, cotton, albumin, polyamide and/or polyester in an amount of up to 10%.

The way of preparation according to the invention consists in neutralizing the hydrolyzate of acrylic polymers to a pH of 6.0 - 8.0, removing the excess of ammonia to 1 - 10 g/dcm$^3$ and then in diluting until the concentration of the solution reaches 1 - 15% w/v. The hydrolyzate is then neutralized with organic and/or mineral acids at a temperature of 10 - 60 °C, during more than 10 minutes under continuous agitation. The neutralized hydrolyzate is then to be diluted with water and/or organic solvents.

The treatment of seeds according to the invention consists in coating the seeds with a mixture of the seed incrustation product with plant pesticides optionally supplemented with nutrient media and dyes and removing the solvent from seeds after dressing. The product after being coated on the seeds builds up a polymer film that binds the dressing chemicals. The incrustation causes the dressing chemicals to be coated on the seeds in a uniform and firm way, the dosing to be precise and dosages of dressing chemicals to be optimized as well as dusting during dressing, packaging, transport and sowing to be avoided.

Xerox Copy Centre

## A product for seed incrustation and a preparation of the product for seed incrustation (film coating)

The subject of the invention is a product for seed incrustation or incapsulation and the way of preparing a product for this purpose.

One of the most important elements that determine the quantity of crops is an optimum amount of plants on the given sown area unit and keeping this amount unchanged till the harvest time. That depends above all on the quality of the sowable material and the protection of this material from diseases and pests. The most profitable way to protect the plants against diseases and pests is the seed dressing or coating applied before sowing. The dressed sowable material ensures a high percentage of germinated plants, the plants grow quickly, are healthy and uniform which results in more effective crops. The efficacy of the seed dressing depends on properly choosing chemicals for seed dressing, the dosages of seed dressing chemicals and the way of seed dressing. According to the form of seed dressing chemicals and the method of application, there are known dry, semi-fluid and wet seed dressing, coating and incrustation. The incrustation of seeds consists in mixing the seed dressing chemical formulated with a fluid product for incrustation and then in coating on the seeds. A coating is obtained that, after drying, binds the dressing chemicals with the seeds. Tests carried out in the Research Institute of Vegetable Crops proved that, as result of the incrustation, the seeds are coated with the dressing chemicals in a uniform and firm way, dosing is precise and dosages of the dressing chemical is optimized. Also a dusting during dressing, packaging, transport and sowing is avoided which increases the work safety. The incrusting products should be characterized by high adhesion and should build up a solid film that is water-soluble, or swells in water, is water-permeable and able to slow down bio-degradation.

There is known a way of seed treatment (Polish patent specification No. 124871) that consists in coating the seeds with water-insoluble and moisture-permeable membrane containing the incrustation product as well as the plant pesticides. The incrustation product is composed of 3.5 - 22.5% w/v of natural or synthetic resins and 67 - 87% w/v of organic solvents such as alcohol or acetone.

There is also known an incrustation product in form of a natural polymer-chitozane supplemented with adhesion and surface active agents (Polish application No. P. 257016).

For the preparation of the known incrustation products very expensive raw materials and toxic or inflammable solvents are required. Also the technological processes of preparation are very difficult.

So there is no possibility to ensure that the final products would comply with the requirements concerning the preparations like this, i.e., high adhesion, building-up a polymer membrane of suitable resistance, permeability, bio-degradation and not being phytotoxic.

The purpose of the invention is to develop a product for incrustation of seeds and a suitable way of formulating this product.

The essence of the invention is that the seed incrustation product consists of macromolecular compounds that contain either the carboxyl or amide groups in a molar ratio of carboxyl groups to amide groups 1:0.001 - 1:1. This product is prepared from the hydrolyzate of an acrylic polymer with a molar ratio of carboxyl groups to amide groups of 1:0.1, a pH higher than 8.0 and a content of ammonia of 1 - 10 $g/dcm^3$. During the treatment the hydrolyzate is neutralized to a pH of 6.0 - 8.0 (preferably 6.5 - 7.5) and then diluted until the concentration of the solution reaches 1 - 15% w/v. The seed dressing consists of providing a uniform coating to the seeds with a mixture of seed incrustation product, plant pesticides optionally combined with dyes and/or nutrient media. From the seeds coated with the mixture as such the solvent is to be removed.

The seed incrustation product according to this invention is made of a polyacrylonitrile or acrylonitrile copolymer optionally supplemented by other polymers such as cotton, cellulose, albumin, polyamide, polyester in an amount of up to 10%. The raw material from which the polymer hydrolyzate is made of is polyacrylonitrile fibres or other polyacrylonitrile wastes. The hydrolyzate prepared in this way contains more than 10 $g/dcm^3$ of ammonia. The ammonia excess is to be reduced at lowered pressure, but higher than 100 mmHg within 10 minutes to 12 hours at a temperature of 10 - 100°C, under continuous agitation. The hydrolyzate is then neutralized at a temperature of 10 - 60°C within more than 10 minutes, under continuous agitation with organic and/or mineral acids such as sulfuric acid, phosphoric acid or citric acid. The neutralized hydrolyzate is further to be diluted with water and/or organic solvents such as alcohols to a concentration of the solution of 1 - 15% w/v with a viscosity -0.5 - 10 poise. After being coated on the seeds the product builds up a polymer membrane that binds the seed dressing chemicals. The membrane built up on the seeds solubilizes or swells in water depending on the molar ratio of carboxyl group to amide groups.

The seeds are to be coated with membrane-forming product with plant pesticides. The seeds could be coated with a mixture of incrustation product and plant pesticides that had been prepared in advance or they could be mixed with plant pesticides in dry condition and then coated with the incrustation product. Depending on the kind of seeds and particularly on their size, the amount of seed dressing chemicals being applied and the way of incrustation, the following is required per one kilogram of seeds: 5 - 350 millilitres of seed incrustation product, 2 - 220 grams of plant pesticides, up to 8 grams of nutrient media containing nitrogen and/or phosphor and/or potassium and/or microelements contained in the nutrient media. 0.05 -0.1% w/v of dyes added to the incrustation product enables the control of the uniformity of seed covering.

Preparing a mixture of seed incrustation product with plant pesticides, 1 dcm$^3$ of incrustation product is to be supplemented with 0.1 - 1 kilogram of plant pesticides.

Example 1

100 parts by weight of hydrolyzate being obtained by alcaline hydrolysis of fibre wastes of acrylonitrile copolymer, type "Anilana" that contains 90% w/v of fibres of acrylonitrile copolymer and cotton and cellulose fibres, were added into a reactor made of acid resistant steel and fitted with heating jacket, mixer and gas offtakes. The hydrolyzate was characaterized by 15% w/v of acrylonitrile copolymer of a molar ratio of carboxyl groups to amide groups of 1:1 and 14.5% w/v of sodium hydroxide. It contained also 15 g/dcm$^3$ ammonia and its pH was 13.5. The excess of ammonia dissolved in the hydrolyzate was removed by continuous agitation at a temperature of 40°C and at a pressure of 100 mmHg within 2 hours until the concentration of ammonia reached 2 g/dcm$^3$. Thereafter 25% of an aqueous solution of sulfuric acid were added into a reactor, at a temperature of 20°C and under continuous agitation, in an amount sufficient to adjust the pH of the hydrolyzate at 7.1. Then, under continuous agitation within 30 minutes 5 parts by weight of processing water were added. The product obtained was a solution with a viscosity of 4.5 P that contained 8% w/v of hydrolyzated acrylonitrile copolymer and 0.1% w/v of ammonium sulfate. The molar ratio of carboxyl groups to amide groups in this compound was 1:0.5. Its adhesivity as well as its membrane-formability were very good and the formed polymer membrane was able to swell and then to solubilize in water. The prepared product was used for incrustation of pea seeds. For that 12 ml of incrustation product were supplemented with 2 g of Funaben T, 4 g of Kaptan and 3 g of Radomil. Thereafter the thus obtained mixture was mixed with 1 kg of pea seeds within 5 minutes until the seeds were uniformly covered with the film-forming preparation. The seeds were not dried. After the water from the mixture was imbibed by the pea, there was built up a thin membrane film on the seeds. In the result the pea seeds dressed as described above showed a yield that was 2% higher than that of the seeds dressed with fungicides in the old-fashioned way, and 25.7% higher than seeds dressed with incrustation product Sacrust having also phytotoxic properties.

Example 2

150 parts by weight of hydrolyzate obtained from 95% w/v of fibre wastes of acrylonitrile copolymer type "Anilana" and 5% w/v of mixture of cellulose, polyester and polyamide fibres were added into the reactor as described in Example 1. The hydrolyzate contains 25% w/v of polymer, 10.4% w/v of potassium hydroxide and 13 g/dcm$^3$ of ammonia. Its pH was 12.9 and the molar ratio of carboxyl groups to amide groups was 1:0.1. Being continuously agitated the ammonia was removed from the hydrolyzate at a temperature of 30°C and at a pressure of 150 mmHg within 1.5 hours until the concentration of ammonia reached 5 g/dcm$^3$. After this process had been finished, 20% aqueous solution of phosphoric acid were added at a temperature of 40°C under continuous agitation within 3 hours at pH 6.9. After cooling the composition down to 20°C, 3500 parts by weight of the processing water were added into the reactor at a temperature of 20°C, supplemented with 10% w/v of ethanol. The viscosity of the product obtained was 1.5 P, the colour dark grey, the contents of polymer was 4.1% w/v, of ammonium phosphate 0.04% w/v and of potassium phosphorate 2.9%. The molar ratio of carboxyl groups to amide groups was 1:0.03. The product was characterized by a high adhesion and membrane formability. The membranes were formed within 25 minutes by being dried at an ambient temperature.

The product thus prepared was applied for incrustation of onion seeds. The mixture of 150 ml of incrustation product supplemented with 50 g of insecticide Oftanol T and 50 g of fungicide Rovral was coated on 1 kg of onion seeds. Then the onion seeds were dried at a temperature of 30°C within 15 minutes. The incrustation caused the number of plants to be 24.8% higher than those that were not subject to incrustation. The preparation Sacrust applied in the same conditions caused the number of plants to fall to 7.7% due to its phytotoxicity.

The same efficacy of the dressing process against the onion fly was obtained by decreasing the dosage of Oftanol T to 25 g.

Example 3

100 parts by weight of polyacrylonitrile hydrolyzate received by alcaline hydrolysis of polyacrylonitrile in form of wastes were added into the reactor as described in example 1. The hydrolyzate contained 23% w/v of polymer that was characterized by a molar ratio of carboxyl groups to amide groups of 1:0.3 and 20% w/v of sodium hydroxide. Its pH was 13.5. Then the aqueous solution of citric acid the concentration of which was 10% w/v was added into the reactor at a temperature of 15°C under continuous agitation within 3 hours, in such an amount sufficient to adjust the pH at 6.8. After this process had been finished, the processing water was added and the mixture was mixed for 15 minutes. The so obtained product was a viscous solution that contained 3% w/v of hydrolyzated polyacrylonitrile and 0.25% w/v of sodium citrate. The product of viscosity of 0.5 P and a pH of 6.75 was characterized by a molar ratio of carboxyl groups to amide groups of 1:0.25. Its adhesivity and membrane formability were very good: the membranes built up are able to swell in water.

The product was applied for incrustation of onion seeds. A mixture of 120 ml of preparation supplemented with 0.075% w/v of dye, 0.2% $K_2O$ and 0.02% $P_2C_6$, 50 g of Oftanol T, 10 g of Rovral and 10 g of Apron was prepared. The processes of incrustation and drying were carried out as described in example 2, directly before sowing. The seeds were uniformly coated with a polymer membrane of red colour. The number of plants before harvest was 24.6% higher than that in the case of seeds dressed in the old-fashioned method.

Claims

1. The seed incrustation product being a solution of a mixture of macromolecular compounds, **characterized** in that the macromolecular compounds contain carboxyl and amide groups in a molar ratio of carboxyl groups to amide groups of 1:0.001 - 1:1.

2. Preparation or formulation of the seed incrustation product, **characterized** in that it comprises the hydrolyzate of acrylic polymers with a molar ratio of carboxyl groups to amide groups of 1:0.1 - 1:2, a pH higher than 8 and a content of ammonia of 1-10 g/dcm³, which is neutralized to a pH 6.0 - 8.0 (preferably 6.5 - 7.5) and then is diluted to a concentration of 1 - 15% w/v.

3. Preparation according to Claim 2, **characterized** in that the hydrolyzate of acrylic polymers is a hydrolyzate of polyacrylonitrile.

4. Preparation according to Claim 2, **characterized** in that the hydrolyzate of acrylic polymers is an acrylonitrile hydrolyzate.

5. Preparation according to Claim 2, **characterized** in that the hydrolyzate of acrylic polymers is supplemented with other polymers such as cellulose, cotton, albumin, polyamide, polyester in an amount of up to 10%.

6. Preparation according to Claim 2, **characterized** in that hydrolyzate is neutralized with organic and/or mineral acids such as sulfuric acid, phosphoric acid or citric acid at a temperature of 10 - 60°C, within 10 minutes under continuous agitation.

7. Preparation according to Claim 2, **characterized** in that from the hydrolyzate containing more than 10 g/dcm³ ammonia, the ammonia is reduced within 10 minutes to 12 hours at a temperature of 10 - 100°C under continuous agitation and at lowered pressure of 13 kPa at least until the concentration of ammonia reaches 1 - 10 g/dcm³.

8. Preparation according to Claim 2, **characterized** in that the neutralized hydrolyzate is diluted with water and/or organic solvents such as alcohol.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | WO-A-8 501 736 (AGRISORB PTY LTD)<br>* Whole document *<br>--- | 1 | A 01 N 25/26<br>A 01 N 25/10 |
| A | CHEMICAL PATENTS INDEX/BASIC ABSTRACTS JOURNAL, section C, week 8828, 7th September 1988, abstract no. 194705/28, Derwent Publications LTD, London, GB; & JP-A-280 041 (LION CORP.) 04-06-1988<br>* Abstract *<br>--- | 2-8 | |
| A | CHEMICAL PATENTS INDEX/BASIC ABSTRACTS JOURNAL, section C, week 8621, 16th July 1986, abstract no. 136539/21, Derwent Publications Ltd, London, GB; & SU-A-720 352 (AS KAZA BOTANY INST.) 07-11-1985<br>* Abstract *<br>----- | 2-8 | |

| TECHNICAL FIELDS SEARCHED (Int. Cl.4) |
|---|
| A 01 N |

The present search report has been drawn up for all claims

| Place of search | Date of completion of the search | Examiner |
|---|---|---|
| THE HAGUE | 22-06-1989 | FLETCHER A.S. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)